# EUROPEAN PATENT SPECIFICATION

(11) **EP 3 076 283 B1**
(45) Date of publication and mention of the grant of the patent: **14.08.2019**
(21) Application number: 15161813.9
(22) Date of filing: 31.03.2015
(51) Int. Cl.: G06F 3/06

(54) **SYSTEM AND METHOD FOR MANAGING CONTENT DELETION**
SYSTEM UND VERFAHREN ZUR VERWALTUNG VON INHALTSLÖSCHUNG
SYSTÈME ET PROCÉDÉ DE GESTION DE CONTENU ET DÉLÉTION

(43) Date of publication of application: 05.10.2016
(73) Proprietor: Advanced Digital Broadcast S.A., 1293 Bellevue (CH)
(72) Inventor: Wowro, Grzegorz, 65-119 Zielona Gora (PL)
(74) Representative: Blonski, Pawel

(56) References cited:
- US-A1- 2004 122 873
- US-A1- 2012 173 593

## Description

The present invention relates to a system and method for managing content deletion. In particular, the present invention relates to managing deleting of files, from a memory of a multimedia device, such that content is automatically deleted and the number of executions of the deleting process is reduced.

Prior art defines systems, where data may be automatically deleted, according to a given order, when free space is required for additional data storage. There are known first-in-first-out (FIFO) systems, where the oldest data is automatically deleted in order to store new data.

It would be advantageous to execute a more sophisticated automatic deletion procedure so that the deleted data is really data, the user needs the least. Further, in case a user is required to confirm deletion of data, this process should not be troublesome for the user as well as not frequent, since a user would be quickly annoyed with such process.

There are on the market devices that record a lot of data, such as photo cameras, video cameras, smartphones or tablets. It would be advantageous in case of these devices, that they include an automatic data deletion mechanism coupled with a manager for reducing the number of execution of the automatic data deletion mechanism.

A publication of US 20040122873 A1 entitled "Free space management" discloses that an attribute is associated with one or more files stored on a storage medium, wherein the attribute is indicative to software utilized by a processor to access the files that the files are deletable. One or more files associated with the attribute can be deleted. Files can be deleted, for example, based upon receipt of a request for file system space. A sufficient amount of free space can be created to fulfill the request via the deletion of the one or more files associated with the attribute. A history of accesses to the files can be maintained and a least recently accessed file, associated with the attribute, can be deleted. Files can also be deleted according to a priority included in the attribute.

The aim of the development of the present invention is an improved system and method for managing content deletion.

### SUMMARY AND OBJECTS OF THE PRESENT INVENTION

An object of the present invention is a method for managing content deletion from a computer memory, the method comprising the steps of: reading free storage space amount; monitoring data storage within at least one time window, during which decrease of free memory space is observed, and obtaining amount of stored data as a decrease in storage space; associating the stored data amount with each time window and storing data of said at least one time window in a database of saved files; verifying presence of a specified condition related to free storage space; obtaining a list of files to delete, according to predefined rules, wherein the amount of data used by the files, present on list of files to delete, exceeds the stored data amount associated with the at least one time window; deleting the files identified by the list of files to delete.

Preferably, the specified condition is an attempt to write a file, which has a size larger than the available free storage space.

Preferably, the specified condition is free memory space decrease below a predefined threshold.

Preferably, the predefined rules include at least one of the following: file storage date, file's last modification date, file size, file type, file content, file rating, number of file reading attempts, the file being marked as read only.

Preferably, the time window data comprises information regarding files such as a file identifier, location and its attributes, the files being stored in the computer memory during the time window.

Preferably, it further comprises a step of providing a break time between the respective time windows.

Another object of the present invention is a system managing content deletion from a computer memory, the system being characterized in that it comprises: a file manager managing files reading and writing from/to the computer memory; wherein the file manager cooperates with a free memory space monitoring module that, based on indications of a timer, periodically checks the amount of free space left in the computer memory; wherein the free memory space monitoring module is configured to monitor changes with respect to free space left in the computer memory in predefined time windows, during which decrease of free memory space is observed, wherein the results of this monitoring are stored in a database and associated with the time windows; a deletion parameters module configured to provide deletion parameters to a file selection monitoring module configured to execute selection of files based on the deletion parameters thereby obtaining a list of files to delete, wherein the amount of data used by the files, present on list of files to delete, exceeds the stored data amount associated with the at least one time window; wherein the file manager is configured to delete the files according to the list of files to delete upon presence of a predefined event.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for managing content deletion. Further details and features of the present invention, its nature and various advantages will become more apparent from the following detailed description of the preferred embodiments shown in a drawing, in which:
Fig. 1 presents a diagram of the system according to the present invention;
Fig. 2 presents a section of the database of saved files;
Fig. 3A-B present another section of the database of saved files;
Fig. 4 depicts details of a deletion parameters module;
Fig. 5A-C show a process of creation of the database of saved files;
Fig. 6 defines details of an automatic data deletion procedure;
Fig. 7 defines details of a second embodiment of the automatic data deletion procedure; and
Fig.8 presents a time chart showing the invention on a time scale.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

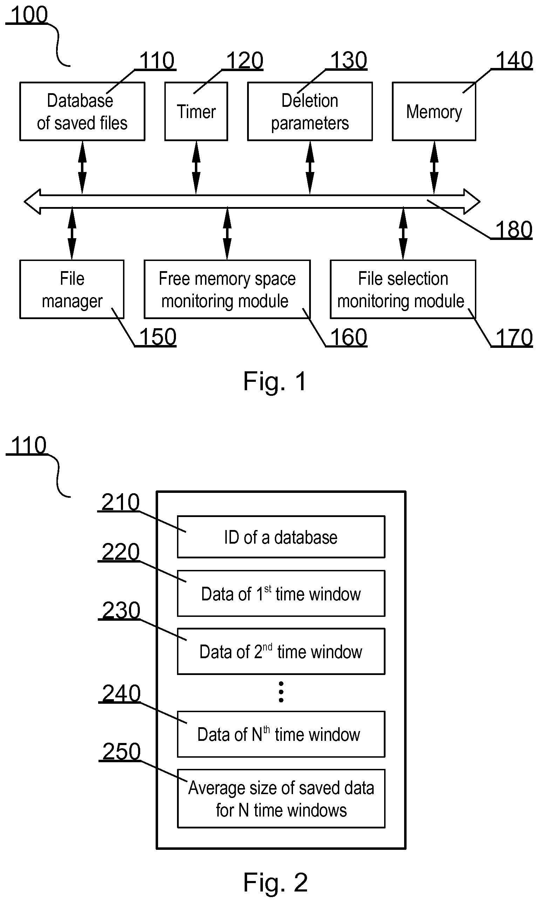

Fig. 1 presents a diagram of the system (100) according to the present invention. The system comprises a file manager (150), managing files reading and writing from/to a memory (140). The memory (140) may be a HDD, an SSD, a memory card or the like. The file manager (150) will typically implement a file system driver for managing data. Such file systems include NTFS, FAT, FAT32, HFS, HFS+ or the like.

Optionally, a database of saved files (110) may be maintained by the file manager (150) in order to have indexed data with fast access. This database may comprise a list of files together with their attributes for quick access.

The file manager (150) cooperates with a free memory space monitoring module (160) that, based on indications of a timer (120), periodically checks the amount of free space left in the memory (140). Further the module (160) is responsible for monitoring changes with respect to free space left in the memory (140) in predefined time windows. The results of this monitoring are stored in the database of saved files (110).

A further module is a deletion parameters module (130) responsible for providing deletion parameters to a file selection monitoring module (170). This module executes selection of files based on the parameters, which may include at least one of the following: file storage date, file last modification date, file size, file type, file content (e.g. face recognition in case of images or movies), file rating (e.g. given by a user), number of file reading attempts, the file being marked as read only (e.g. by the user).

The system may be realized using dedicated components or custom made FPGA or ASIC circuits. The system comprises a data bus (180) communicatively coupled to other components of the system, including the memory (140). Additionally, other components of the system are communicatively coupled to the system bus (180) so that they may be managed by the file manager (150).

The memory (140), may store computer program or programs executed by the file manager (150) in order to execute steps of the method according to the present invention.

Fig. 2 presents a section of the database of saved files (110). This section relates to information regarding one or more time windows, during which decrease of free memory space is observed. The database (110) content comprises data of at least one time window (220 - 240). Each time window is preferably equal in terms of duration and may be associated with a number of stored files during the time window as well as a decrease in storage space during the time window. Further, the database (110) may comprise an average size of saved data for N time windows (250).

Optionally, there may be present more than one database of saved files (110), which are identified with a specific database identifier (210). More than one database of saved files (110) may be useful for determining memory use profile in longer periods of time.

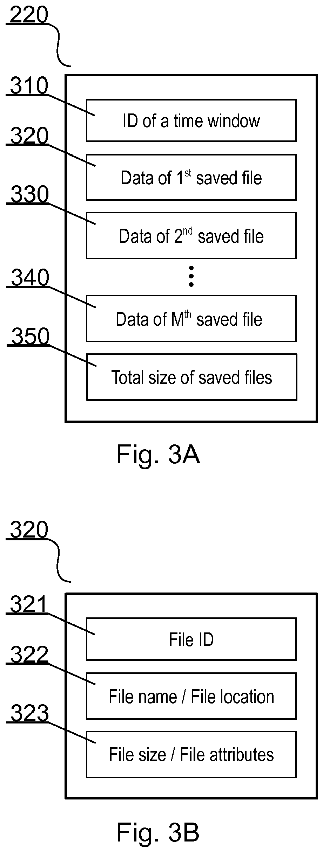

Fig. 3A-B present another section of the database of saved files. This section relates to information regarding one or more files stored in the memory (140). This index of files allows for easy access of files selected for deletion by the file selection monitoring module (170).

Each record (320-340) comprises information regarding files such as a file identifier (321), location (322)) and its attributes (323) such as: file storage date, file last modification date, file size, file type, file content (e.g. face recognition in case of images or movies), file rating (e.g. given by a user), number of file reading attempts, the file being marked as read only (e.g. by the user). These files being stored in the storage memory during the time window.

Optionally, each file record (320-340) may be associated with a given time window (310) and a record indicating a total size of saved files (350) may be present in the database.

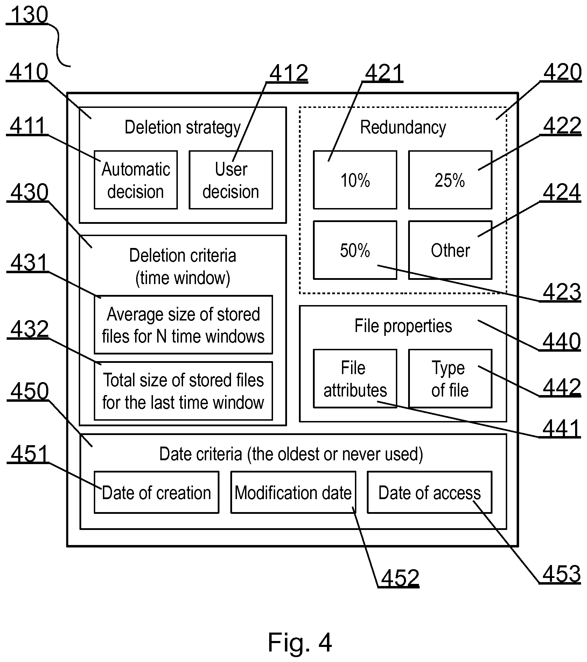

Fig. 4 depicts details of the deletion parameters module (130). Parameters of this module may be predefined as well as they may be modified according to users' needs. The deletion strategy (410) refers to requesting a user to approve automatic selection of content to delete (411) as well as requesting a user to confirm deletion of selected files (412). In case the confirmation (412) is not required, the system will delete data automatically, based on its findings.

The deletion redundancy option (420) is a parameter related to an optional increase of amount of data to be deleted indicated by the time window approach. A user may specify (421-424), preferably in %, the extent of increase of the data amount to be deleted upon execution of the deletion process according to the present invention. This extent of increase will most likely be below 100% but may equal or be above 100%.

For example, if the average size of saved data for N time windows (250) (or for the size of saved data for the last time window) equals 100 megabytes and the deletion redundancy option (420) is set to 25% (422), the deleted amount of data will equal to 125 megabytes. Owing to such approach, a user will not be annoyed with frequent executions of the automatic deletion procedure.

The remaining deletion criteria (430-453) take into account amount of data i.e. an average amount of data stored during N time windows (431) or the amount of data stored during the last time window (432). Other deletion criteria may include attributes such as: file storage date (oldest files are selected first), file last modification date (files modified recently are preferably kept in memory), file size (larger files may be deleted first), file type (particular file types may be deleted while other file types shall be kept), file content (e.g. face recognition in case of images or movies), file rating (e.g. given by a user), number of file reading attempts, the file being marked as read only (e.g. by the user).

All the above options may have default values and be selectively set to different values depending on users' needs.

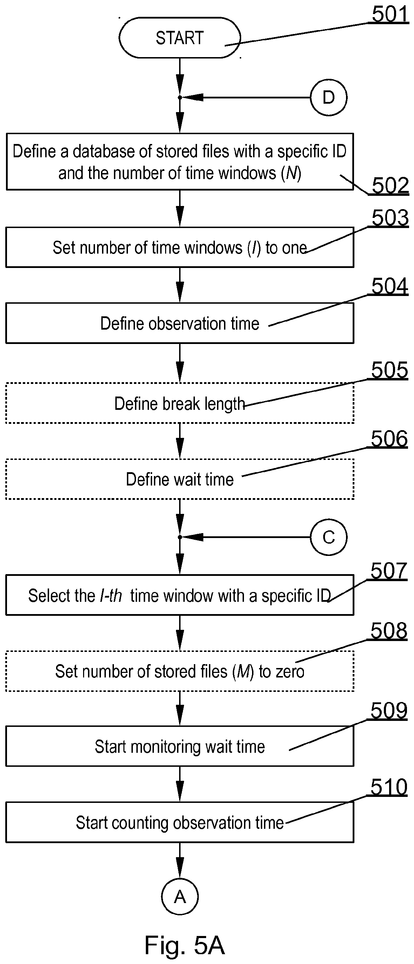

Fig. 5A-C show a process of creation of the database of saved files. The process starts at step 501. Next at step 502 there is executed defining a database of stored files with a specified ID. Alternatively an existing database of stored files with a specific ID, may be opened for access. Such database may already comprise a number of time windows (N). In one example, the database of stored files may comprise a fixed number of time windows (503), while in another example, the number of time windows may be variable.

Subsequently, at step (504) of the process, there is defined observation time, which is a length of a time window that may be set by means of the deletion parameters module (130).

Optionally there may be defined a break time (505). This time may be set to 0 seconds or more in order to limit the number or executions of the monitoring process in time.

In case the system maintains more than one database of stored files (110), a wait parameter (506) may define how often a new database of stored files (110) is to be created.

Subsequently, at step (507), there is selected the I-th time window with a specific ID in order to set number of stored files (M) to zero (508). This facilitates creation of a fresh database (110), which is optional as an existing database (110) may be used. In case of an existing database, it is only selected at step (507).

Next, at step (509), in case the wait time parameter has been defined at step (506) there is started a monitoring of the wait time. In an alternative example, the wait time may be set to infinity, which will result in maintaining only a single database (110).

Subsequently, at step (510), there is started a timer for counting observation time. This time is managed by the timer module (120).

Further, at step (511) the system awaits for an event related to request for a file write operation. At step (513), the system detects whether the file identified by the request of step (511) may be stored. In case the file cannot be stored, due to lack of sufficient storage space, the system executes automatic delete process (514) according to the present invention.

At step (515) there is executed file storage operation and there is increased the number of stored files (M ← M + 1) as well as there is created a new file record in the database (110) describing the M-th file in the I-th time window.

At step (517) there is executed a check whether the elapsed time equals or is greater than the predefined time window duration. This verification is executed also when there has not been stored any file. When files are not stored this check may be executed less frequently, e.g. with a defined pause time.

In case the predefined time window duration has not passed, the procedure returns to step (511) and monitors further file storage requests. Otherwise, at step (518), there is executed a calculation of the total size of stored files during the time window and this value is associated with the I-th time window (220) as a reference data field (350).

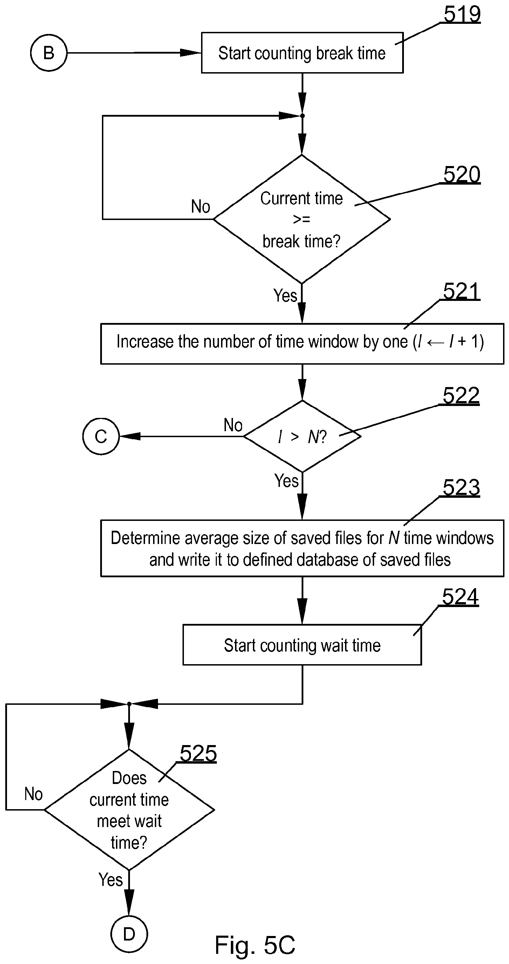

In case there has been defined a break time and a plurality of databases (110) shall be created, the process of Fig. 5C may be executed at the last stage of the procedure. At step (519) there is started a timer for counting the predefined break time. When this break time elapses at step (520), the procedure advances (521) to increasing the number of time window by one (I ← I + 1) i.e. a new time window is created. In case the number of time windows I exceeds (522) the maximum number of time windows N per database (110), the procedure returns to point (C) i.e. to step (507).

Subsequently, at step (523), there is determined an average size of saved files (250) for N time windows and this value is stored as a section of the currently selected database of stored files (110).

In case a wait time between time windows has been defined, steps (524) and (525) may be executed in order to check whether the waiting time has been applied correctly.

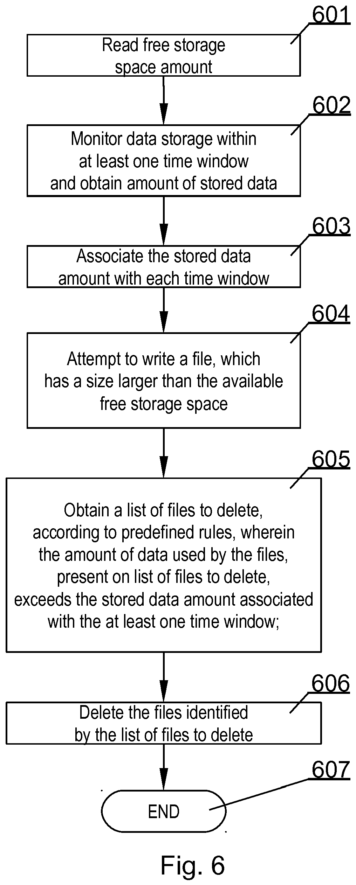

Fig. 6 defines details of the automatic data deletion procedure. The first four steps of the process have already been presented with reference to the preceding Figs. 5A-5C and include the steps of reading free storage space amount (601), monitoring data storage within at least one time window and obtaining amount of stored data (602), associating the stored data amount with each time window (603) and attempting to write a file which has a size larger than the available free storage space (604).

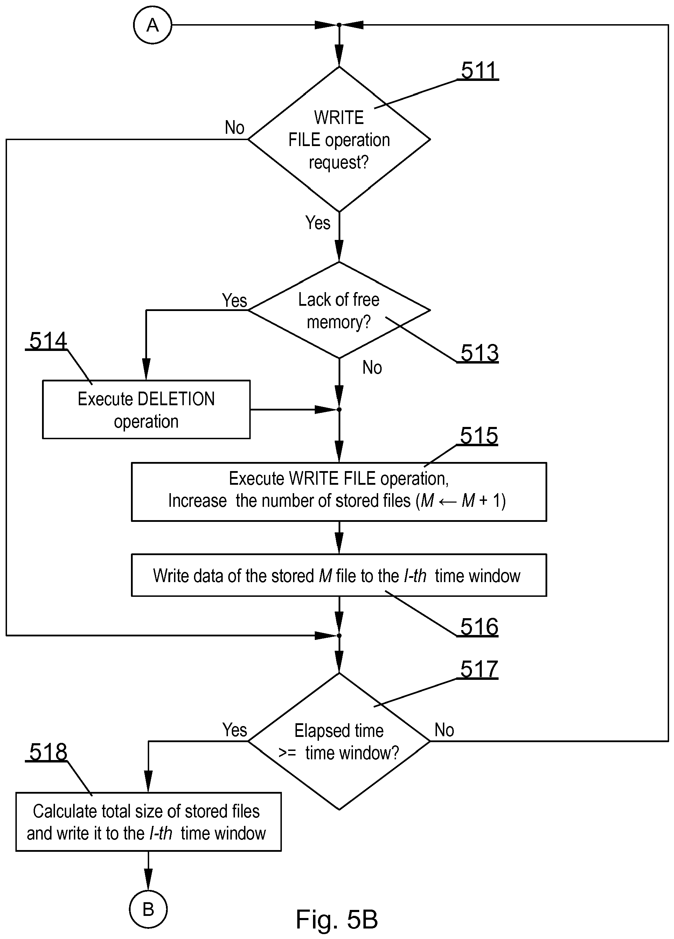

At this point, process step (514) in Fig. 5B is reached. Subsequently, at step (605) there is obtained a list of files to delete, according to predefined rules, wherein the amount of data used by the files, present on list of files to delete, exceeds the stored data amount associated with the at least one time window. Specific rules for selecting files have been presented with reference to Fig. 4.

The final step of the procedure (606) is to delete the files identified by the list of files to delete.

In another embodiment, the step (514) i.e. the automatic deletion operation, may be executed not only upon storage of a file, but may be invoked due to other events in the computer system, for example much earlier when free memory space decreases below a predefined threshold or at any given moment in time that may also by indicated by a user. Thus, at step (604) there may be in general verified presence of a specified condition.

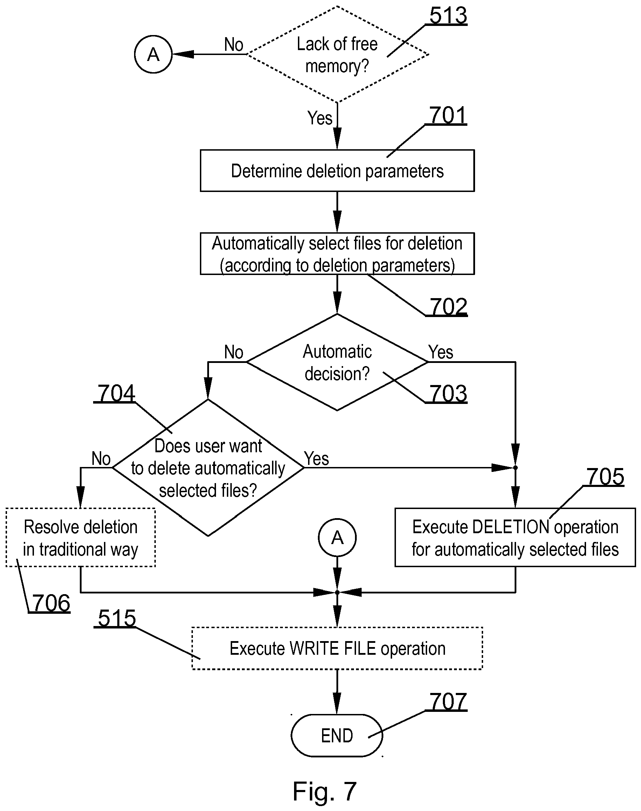

Fig. 7 defines details of a second embodiment of the automatic data deletion procedure. This embodiment involves obtaining user's decision during the deletion process. The process starts when the system confirms lack of memory at step (513). Subsequently, at step (701), the deletion parameters are determined in line with the description of Fig. 4. Next, at step (702) there are automatically selected files for deletion (according to deletion parameters and the data amount associated with the at least one time window).

For example, during the previously completed monitoring during a time window it has been found that within the recent 5 minutes a user has written data to the storage memory and that the memory free space has decreased by 100 megabytes. At this step a list of files to remove will be created, according to the deletion rules, wherein the space occupied by such files will equal of be just above the 100 megabytes in this example. This amount may be further increased by the redundancy parameter as shown in Fig. 4.

Subsequently, at step (703), it is checked whether a user has requested a manual confirmation of the list of files to remove. In case the decision is automatic, at step (705), where there is executed a deletion operation of the automatically selected files. Otherwise a user's decision is obtained at step (704) where a user may confirm automatic deletion (705) or review a list of files to remove and remove the files manually (704).

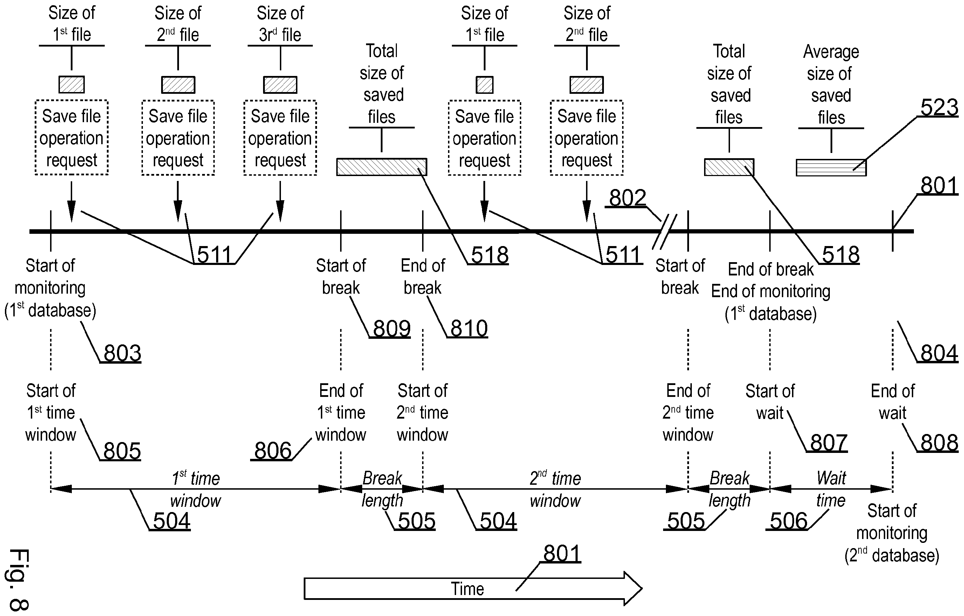

Fig. 8 presents a time chart showing the invention on a time scale wherein two databases (110) are presented wherein the first database (110) comprises two time windows. In the arrangement according to this embodiment, as time (801) elapses there is defined a first database (803) as well as a first time window (805-806) which is followed by a first break (809-810). Thereafter, a second time window is monitored, which is the last time window in the first database (803). Subsequently, a wait time (807-808) is applied between databases and finally a second database is created at time (808).

The proposed system assists deletion of files with additional data deletion so that more storage space is freed than for example required to store the currently processed file. This solves the lack of space for a longer period of time and allows using a media-device without frequently returning to the issue of lack of files storage space.

The present invention simplifies a use of electronic devices comprising high capacity storage memory for data, the deletion of less relevant content is automatically suggested and upon deletion of the respective data a user bothered with 'out of memory messages'. Therefore, the invention provides a useful, concrete and tangible result.

The invention has been presented with respect to an electronic devices comprising high capacity storage memory for data. The respective data is monitored and deleted, thus the machine or transformation test is fulfilled and the idea is not abstract.

It can be easily recognized, by one skilled in the art, that the aforementioned method for managing content deletion may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the scope of the claims that follows.

Accordingly, the scope of protection is not limited to the preferred embodiments described in the specification, but is only limited by the claims that follow.

## Claims

1. Method for managing content deletion from a computer memory (140), the method comprising the steps of:
• reading free storage space amount (601);
the method being **characterized in that** it further comprises the steps of
• monitoring data storage within at least one time window, during which decrease of free memory space is observed, and obtaining amount of stored data (602) as a decrease in storage space;
• associating the stored data amount with each time window (603) and storing data of said at least one time window (220 - 240) in a database of saved files (110);
• verifying presence of a specified condition (604) related to free storage space;
• obtaining (605) a list of files to delete, according to predefined rules, wherein the amount of data used by the files, present on list of files to delete, exceeds the stored data amount associated with the at least one time window;
• deleting (606) the files identified by the list of files to delete.

2. The method according to claim 1 **characterized in that** the specified condition (604) is an attempt to write a file, which has a size larger than the available free storage space.

3. The method according to claim 1 **characterized in that** the specified condition (604) is free memory space decrease below a predefined threshold.

4. The method according to claim 1 **characterized in that** the predefined rules include at least one of the following: file storage date, file's last modification date, file size, file type, file content, file rating, number of file reading attempts, the file being marked as read only.

5. The method according to claim 1 **characterized in that** the time window data comprises information regarding files such as a file identifier, location and its attributes, the files being stored in the computer memory during the time window.

6. The method according to claim 1 **characterized in that** it further comprises a step of providing a break time between the respective time windows.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. System managing content deletion from a computer memory, the system being **characterized in that** it comprises:
• a file manager (150) managing files reading and writing from/to the computer memory (140);
• wherein the file manager (150) cooperates with a free memory space monitoring module (160) that, based on indications of a timer (120), periodically checks the amount of free space left in the computer memory (140);
• wherein the free memory space monitoring module (160) is configured to monitor changes with respect to free space left in the computer memory (140) in predefined time windows, during which decrease of free memory space is observed, wherein the results of this monitoring are stored in a database (110) and associated with the time windows;
• a deletion parameters module (130) configured to provide deletion parameters to a file selection monitoring module (170) configured to execute selection of files based on the deletion parameters thereby obtaining (605) a list of files to delete, wherein the amount of data used by the files, present on list of files to delete, exceeds the stored data amount associated with the at least one time window;
• wherein the file manager (150) is configured to delete the files according to the list of files to delete upon presence of a predefined event.

## Patentansprüche

1. Verfahren zum Verwalten von Inhaltslöschung aus einem Computerarbeitsspeicher (140), wobei das Verfahren die Schritte aufweist zum:
• Lesen von freier Speicherplatzmenge (601);
wobei das Verfahren **dadurch gekennzeichnet ist, dass** es ferner die Schritte aufweist zum
• Überwachen von Datenspeicherung in mindestens einem Zeitfenster, indem eine Verringerung des freien Arbeitsspeicherplatzes beobachtet wird, und Erhalten einer Menge von gespeicherten Daten (602) als eine Verringerung von Speicherplatz;
• Zuordnen der gespeicherten Datenmenge zu jedem Zeitfenster (603)und Speichern von Daten des mindestens einen Zeitfensters (220 bis 240) in einer Datenbank von gespeicherten Dateien (110);
• Prüfen eines Vorhandenseins einer bestimmten Bedingung (604), die in Zusammenhang mit freiem Speicherplatz steht;
• Erhalten (605) einer Liste von zu löschenden Dateien gemäß vordefinierten Regeln, wobei die Datenmenge, die durch die Dateien in Anspruch genommen wird, die auf der Liste von zu löschenden Dateien vorhanden sind, die dem mindestens einen Zeitfenster zugehörige gespeicherte Datenmenge überschreitet;
• Löschen (606) der Dateien, die durch die Liste der zu löschenden Dateien identifiziert wurden.

2. Verfahren nach Anspruch 1, **dadurch gekennzeichnet, dass** die bestimmte Bedingung (604) ein Versuch ist, eine Datei zu schreiben, die eine Größe hat, die größer als der verfügbare freie Speicherplatz ist.

3. Verfahren nach Anspruch 1, **dadurch gekennzeichnet, dass** die bestimmte Bedingung (604) eine Verringerung von freiem Arbeitsspeicherplatz unter einem vordefinierten Schwellenwert ist.

4. Verfahren nach Anspruch 1, **dadurch gekennzeichnet, dass** die vordefinierten Regeln mindestens eines von Folgendem enthalten: Datum der Datenspeicherung, Datum der letzten Modifizierung der Datei, Dateigröße, Dateityp, Dateiinhalt, Datei-Rating, Anzahl von Leseversuchen der Datei, die als schreibgeschützt markierte Datei.

5. Verfahren nach Anspruch 1, **dadurch gekennzeichnet, dass** die Zeitfensterdaten Informationen in Bezug auf Dateien aufweisen, wie beispielsweise Dateikennung, Speicherort und dessen Attribute, die Dateien, die in dem Computerarbeitsspeicher während des Zeitfensters gespeichert wurden.

6. Verfahren nach Anspruch 1, **dadurch gekennzeichnet, dass** es ferner einen Schritt zum Bereitstellen einer Pausenzeit zwischen den jeweiligen Zeitfenstern aufweist.

7. Computerprogramm, aufweisend Programmcodemittel zum Ausführen aller Schritte des durch einen Computer umgesetzten Verfahrens gemäß Anspruch 1, wenn das Programm auf einem Computer ausgeführt wird.

8. Durch einen Computer lesbares Medium, das durch einen Computer ausführbare Anweisungen speichert, die alle Schritte des durch einen Computer umgesetzten Verfahrens gemäß Anspruch 1 ausführen, wenn sie auf einem Computer ausgeführt werden.

9. System zum Verwalten von Inhaltslöschung aus einem Computerarbeitsspeicher, wobei das System **dadurch gekennzeichnet ist, dass** es aufweist:
• einen Dateimanager (150), der Dateien verwaltet, indem er sie aus dem Computerarbeitsspeicher (140) ausliest oder in diesen schreibt;
• wobei der Dateimanager (150) mit einem Modul zum Überwachen von freiem Arbeitsspeicherplatz (160) zusammenwirkt, das auf Grundlage eines Zeitgebers (120) periodisch die Menge von freiem Speicherplatz prüft, die in dem Computerarbeitsspeicher (140) übrig ist;
• wobei das Modul zum Überwachen von freiem Arbeitsspeicherplatz (160) konfiguriert ist, um Änderungen in Bezug auf in dem Computerarbeitsspeicher (140) übrigen freien Speicherplatz in vordefinierten Zeitfenstern zu überwachen, während denen eine Verringerung von freiem Arbeitsspeicherplatzes beobachtet wird, wobei die Ergebnisse dieser Überwachung in einer Datenbank (110) gespeichert und den Zeitfenstern zugeordnet werden;
• ein Löschparametermodul (130), das konfiguriert ist, um Löschparameter für ein Dateiauswahl-Überwachungsmodul (170) bereitzustellen, das konfiguriert ist, um eine Auswahl von Dateien auf Grundlage der Löschparameter auszuführen, wodurch eine Liste mit zu löschenden Dateien erhalten wird (605), wobei die Datenmenge, die durch die Dateien in Anspruch genommen wird, die auf der Liste von zu löschenden Dateien vorhanden sind, die dem mindestens einen Zeitfenster zugehörige gespeicherte Datenmenge überschreitet;
• wobei der Dateimanager (150) konfiguriert ist, um die Dateien gemäß der Liste mit zu löschenden Dateien bei Vorhandensein eines vordefinierten Ereignisses zu löschen.

## Revendications

1. Procédé permettant la gestion de la suppression de contenu d'une mémoire d'ordinateur (140), le procédé comprenant les étapes de :
• lecture de la quantité d'espace de stockage libre (601);
le procédé étant **caractérisé en ce qu'**il comprend en outre les étapes de
• surveillance du stockage de données dans les limites d'au moins une fenêtre temporelle, durant laquelle une diminution de l'espace mémoire libre est observée, et obtention d'une quantité de données stockées (602) en tant que diminution de l'espace de stockage;
• association de la quantité de données stockées à chaque fenêtre temporelle (603) et stockage des données de stockage de ladite au moins une fenêtre temporelle (220 à 240) dans une base de données de fichiers sauvegardés (110);
• vérification de la présence d'une condition spécifiée (604) liée à l'espace de stockage libre;
• obtention (605) d'une liste de fichiers à supprimer, selon des règles prédéfinies, ladite quantité de données utilisée par les fichiers, présents dans la liste de fichiers à supprimer, dépassant la quantité de données stockées associée à la au moins une fenêtre temporelle;
• suppression (606) des fichiers identifiés par la liste des fichiers à supprimer.

2. Procédé selon la revendication 1, **caractérisé en ce que** la condition spécifiée (604) est une tentative d'écriture d'un fichier dont la taille est supérieure à l'espace de stockage libre disponible.

3. Procédé selon la revendication 1, **caractérisé en ce que** la condition spécifiée (604) est une diminution d'espace mémoire libre en dessous d'un seuil prédéfini.

4. Procédé selon la revendication 1, **caractérisé en ce que** les règles prédéfinies comprennent au moins l'un des suivants : une date de stockage de fichier, une date de dernière modification de fichier, une taille de fichier, un type de fichier, un contenu de fichier, une cote de fichier, un nombre de tentatives de lecture du fichier, le fichier étant marqué comme étant en lecture seule.

5. Procédé selon la revendication 1, **caractérisé en ce que** les données de fenêtre temporelle comprennent des informations concernant des fichiers telles qu'un identificateur de fichier, un emplacement et ses attributs, les fichiers étant stockés dans la mémoire d'ordinateur durant la fenêtre temporelle.

6. Procédé selon la revendication 1, **caractérisé en ce qu'**il comprend en outre une étape de fourniture d'un temps de pause entre les fenêtres temporelles respectives.

7. Programme informatique comprenant un moyen de code de programme destiné à effectuer toutes les étapes du procédé mis en oeuvre par ordinateur selon la revendication 1, lorsque ledit programme est exécuté sur un ordinateur.

8. Support lisible par ordinateur stockant des instructions exécutables par ordinateur effectuant toutes les étapes du procédé mis en oeuvre par ordinateur selon la revendication 1, lorsqu'elles sont exécutées sur un ordinateur.

9. Système gérant la suppression de contenu d'une mémoire d'ordinateur, le système étant **caractérisé en ce qu'**il comprend :
• un gestionnaire de fichiers (150) gérant les fichiers en lecture et en écriture à partir de/vers la mémoire d'ordinateur (140);
• ledit gestionnaire de fichiers (150) coopérant avec un module de surveillance d'espace mémoire libre (160) qui, sur la base des indications d'un temporisateur (120), vérifie périodiquement la quantité d'espace libre restant dans la mémoire d'ordinateur (140);
• ledit module de surveillance d'espace mémoire libre (160) étant configuré pour surveiller les modifications par rapport à l'espace libre restant dans la mémoire d'ordinateur (140) dans des fenêtres temporelles prédéfinies, durant lesquelles une diminution de l'espace mémoire libre est observée, lesdits résultats de cette surveillance étant stockés dans une base de données (110) et associés aux fenêtres temporelles;
• un module de paramètres de suppression (130) configuré pour fournir des paramètres de suppression à un module de surveillance de sélection de fichiers (170) configuré pour exécuter une sélection de fichiers sur la base des paramètres de suppression, obtenant ainsi (605) une liste de fichiers à supprimer, ladite quantité de données utilisée par les fichiers, présents sur la liste des fichiers à supprimer, dépassant la quantité de données stockées associée à la au moins une fenêtre temporelle;
• ledit gestionnaire de fichiers (150) étant configuré pour supprimer les fichiers selon la liste de fichiers à supprimer lors de la présence d'un événement prédéfini.
